# EUROPÄISCHE PATENTANMELDUNG

(11) **EP 1 255 028 A2**
(43) Veröffentlichungstag der Anmeldung: **06.11.2002**
(21) Anmeldenummer: 02009859.6
(22) Anmeldetag: 02.05.2002
(51) Int. Cl.: F01P 5/04, F01P 11/02, F04D 29/64

(54) **Blasgeformter Träger**

(30) Priorität: 03.05.2001 DE 10121595; 05.07.2001 DE 10132602
(71) Anmelder: Kautex Textron GmbH & Co. KG., 53229 Bonn (DE)
(72) Erfinder: Moitzheim, Jürgen, 53639 Königswinter (DE); Birk, Axel, 53545 Linz (DE); Claydon, Malcom, Worcester WR2 6AE (GB)
(74) Vertreter: Kierdorf, Theodor, Dipl.-Ing.

(57) **Zusammenfassung**

Die Erfindung betrifft einen blasgeformten Kunststoffträger für Kfz-Kühlergebläse mit wenigstens einem Kühlluftdurchtritt, mit Mitteln zur Befestigung wenigstens eines Gebläses und mit wenigstens einem integrierten Flüssigkeitsbehälter oder dergleichen. Der Kunststoffträger zeichnet sich dadurch aus, dass dieser eine metallene Verstärkungseinlage aufweist, die von dem Kunststoff des Trägers umblasen und wenigstens teilweise durchdrungen ist, wobei die Verstärkungseinlage mit Befestigungsmitteln zur Befestigung des Trägers und zur Aufnahme weiterer Funktionsbauteile vorgesehen ist.

## Beschreibung

Die Erfindung betrifft einen blasgeformten Kunststoffträger für Kfz-Kühlergebläse mit wenigstens einem Kühlluftdurchtritt, mit Mitteln zur Befestigung wenigstens eines Gebläses und mit wenigstens einem integrierten Flüssigkeitsbehälter oder dergleichen.

Ein derartiger Träger für ein Kfz-Kühlergebläse ist beispielsweise aus der US-PS 5,649,587 bekannt. Ein Vorzug dieses blasgeformten Trägers ist, dass durch dessen einstückige doppelwandige Ausführung, die durch Extrusions-Blasformen erhalten wurde, verschiedene Funktionalitäten in einem Bauteil vereinigt werden können. So können beispielsweise Kühlmittelbehälter, Wischwasserbehälter und dergleichen in den für ein oder mehrere Ventilatoren ein Gehäuse bildenden Träger integriert werden.

Aufgrund der doppelwandigen Ausbildung als extrusionsblasgeformtes Bauteil besitzt so ein Träger auch hinreichende Stabilität.

Bei der Herstellung von Kfz wird zur Montagevereinfachung zunehmend auf Bauteile mit hohem Integrationsgrad Wert gelegt. Es besteht daher das Bemühen, möglichst viele Funktionalitäten in einer Baugruppe zu vereinigen.

Der Erfindung liegt daher die Aufgabe zugrunde, einen blasgeformten Kunststoffträger der eingangs genannten Art hinsichtlich seiner Funktionalität und seiner Integrierbarkeit zu verbessern.

Die Aufgabe wird dadurch gelöst, dass der Träger wenigstens eine vorzugsweise metallene Verstärkungseinlage aufweist, die von dem Kunststoff des Trägers umblasen und wenigstens teilweise durchdrungen ist, wobei die Verstärkungseinlage mit Befestigungsmitteln zur Montage des Trägers und zur Aufnahme weiterer Funktionsbauteile versehen ist.

Unter Blasformen im Sinne der Erfindung soll Extrusionsblasformen zu verstehen sein.

Auf diese Art und Weise ist es möglich, den Träger als sogenanntes "Front-End-Modul" auszubilden, welches beispielsweise mit einer Klimagerätekühleraufnahme, Luftversorgungskanälen, Einlassresonatoren, Kühlwasserausgleichsbehälter, Scheibenwaschbehälter, Scheinwerferreinigungsbehälter, Ölkühlersitz, Hauptlüfteraufnahme, Kühleraufnahme, Kühlwasserrohr mit Schnellverbindern, Kondensatsammelbehältern und dergleichen versehen werden kann. Die metallene Verstärkungseinlage kann mit entsprechenden Befestigungsmitteln zur Befestigung an der Fahrzeugkarosserie versehen sein.

Vorzugsweise bildet die Verstärkungseinlage wenigstens zwei Scheinwerferaufnahmen.

Alle Bauteile, insbesondere alle Funktionsbauteile, wie beispielsweise Scheibenwaschbehälter, Kühlwasserausgleichsbehälter und dergleichen können als integraler Bestandteil des Kunststoffträgers ausgebildet sein. Diese werden zweckmäßigerweise in einem Arbeitsgang durch Extrusionsblasformen aus einem oder mehreren schlauchförmig extrudierten Vorformlingen mit dem Träger hergestellt.

Die aus Kunststoff bestehenden Funktionsbauteile können durch Wand-Zu-Wand-Verschweißungen wenigstens eines schlauchförmig extrudierten Vorformlings erhalten worden sein. Verprägungen oder Wand-Zu-Wand-Verschweißungen können auch zu Verstärkungs- bzw. Aussteifungszwecken vorgesehen sein.

Je nach Funktionalität der einzelnen Kunststoffbauteile und Behälter kann der Träger aus verschiedenen Kunststoffen zusammengesetzt sein. Es kann beispielsweise wünschenswert sein, Bereiche des Trägers, die im montierten Zustand nahe der Bodengruppe des Kfz angeordnet sind, aus besonders schlagzähem Kunststoff auszubilden.

Die Anordnung verschiedener Funktionsbauteile aus verschiedenen Kunststoffen als integraler Bestandteil des Trägers kann beispielsweise dadurch erreicht werden, dass dieser aus mehreren schlauchförmig in eine gemeinsame Form extrudierten Vorformlingen hergestellt wird. Alternativ oder zusätzlich ist es möglich, eine unterschiedliche stoffliche Zusammensetzung verschiedener Funktionsbauteile durch sequentielle Extrusion unterschiedlicher Materialien aus einem Vorformling zu erhalten.

Die Verstärkungseinlage kann als vorgestanztes und/oder zumindest teilweise vorgeformtes Stahlblech ausgebildet sein.

Besonders vorteilhaft kann es sein, wenn die Verstärkungseinlage beim Schließen der Blasformhälften durch deren Schließdruck dauerhaft verformt wurde. Dies hat den Vorzug, dass ein Arbeitsschritt bei der Herstellung der Verstärkungseinlage eingespart wird.

Es ist für den Fachmann ersichtlich, dass die Verstärkungseinlage nicht notwendigerweise aus Stahlblech bestehen muss, diese kann vielmehr auch aus spritzgegossenem Kunststoff, GFK oder einem Duroplasten ausgebildet sein.

Durch die Herstellungsweise, d. h. durch das Umblasen einer Einlage, beispielsweise eines Stahlblechs mit Kunststoff wird eine innige Verbindung bzw. Verankerung der Materialien miteinander erreicht, so dass insgesamt ein multifunktionales und insbesondere stabiles Bauteil mit einem hohen Integrationsgrad erhalten wird.

Die Erfindung wird nachstehend anhand eines in den Zeichnungen dargestellten Ausführungsbeispiels erläutert:

Es zeigen:
- Fig. 1: der Träger in perspektivischer Ansicht,
- Fig. 2: zwei geöffnete Blasformhälften mit darin eingelegtem Stahlblechrahmen,
- Fig. 3: eine Ansicht in Richtung der Pfeile III-III in Fig. 2,
- Fig. 4: einen Schnitt entlang der Linien IV-IV in Fig. 3,
- Fig. 5, 6 u.7: schematische Darstellungen der Anordnungen des oder der Vorformlinge bezüglich des zwischen den Formhälften gehaltenen Stahlblechrahmens und
- Fig. 8: den Schnitt entsprechend dem in Fig. 5 dargestellten Schnitt mit zusammengefahrenen Formhälften.

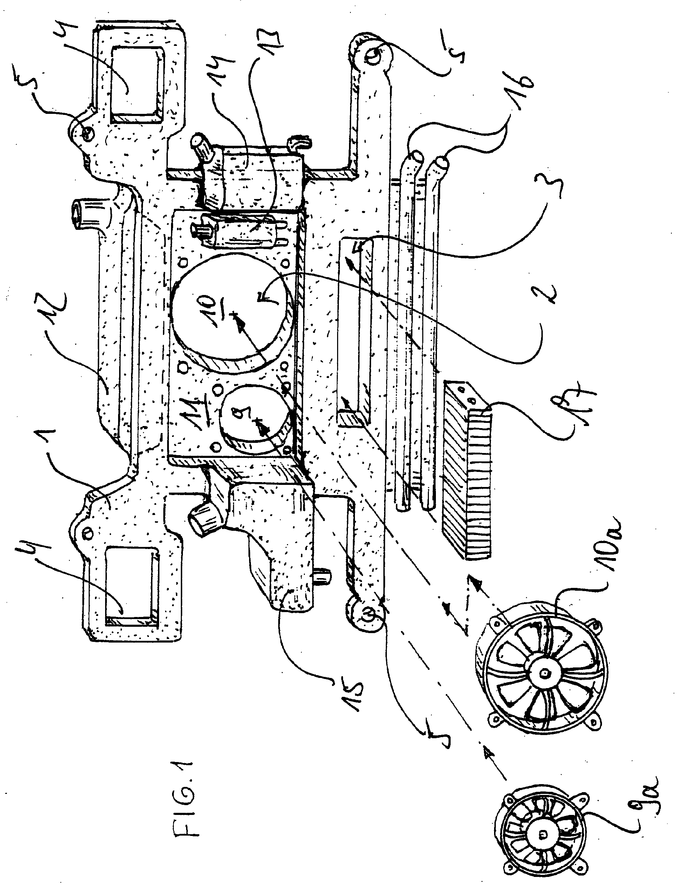

Der in Fig. 1 perspektivisch dargestellte Träger ist als Front-End-Modul zur Anordnung zwischen Kühlergrill und Kühler eines Kraftfahrzeugs ausgebildet. Dieser umfasst einen mit 1 bezeichneten Stahlblechrahmen, der einen mittleren Durchlass 2 und einen in Einbaulage unteren Durchlass 3, Scheinwerferaufnahmen 4 sowie vier Befestigungsaugen 5 zur Karosseriemontage aufweist. Der Stahlblechrahmen 1 bildet einen tragenden Verbund mit diversen Kunststoffteilen, die durch Extrusions-Blasformen erhalten wurden und mit dem Stahlblechrahmen, diesen teilweise durchdringend eine innige Verbindung bzw. Verankerung eingehen.

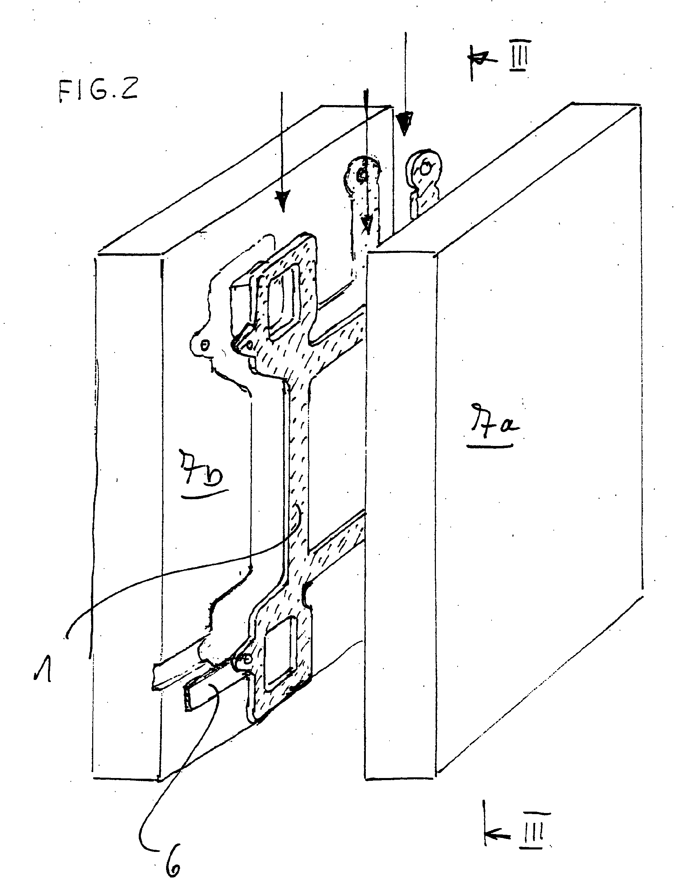

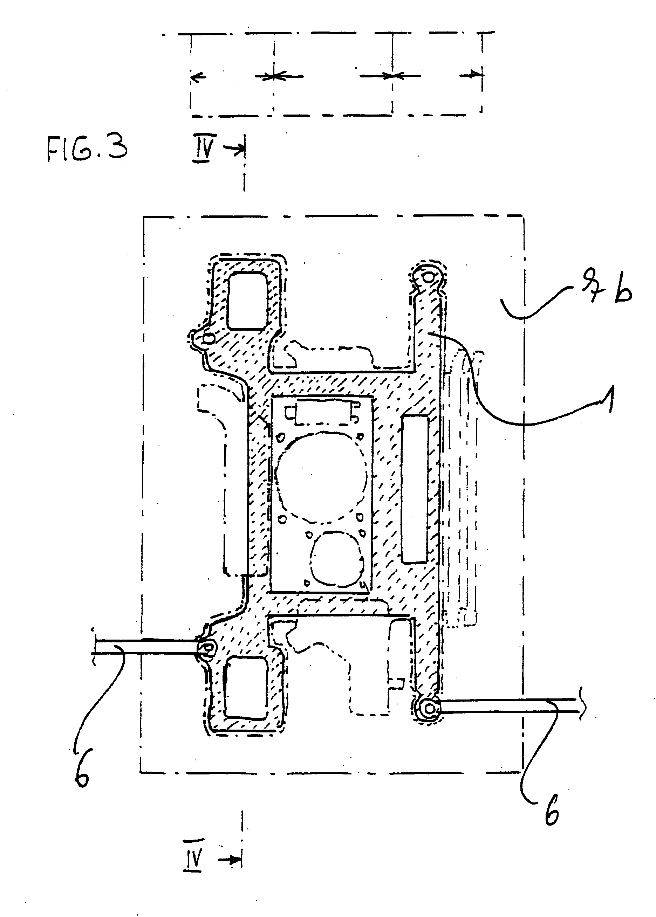

Wie dies in den Figuren 2 bis 8 verdeutlicht ist, wird zur Herstellung des Trägers gemäß der Erfindung der vorgestanzte Stahlblechrahmen 1 mittels zweier Halteelemente 6 zwischen den ein Formnest bildenden Formhälften 7A, 7B eine Blasform positioniert.

Je nach Konfigurierung des fertigen Bauteils werden aus einem oder mehreren nicht dargestellten über den Formhälften angeordneten Extrusionsköpfen ein oder mehrere schmelzflüssige schlauchförmige Vorformlinge extrudiert, die in bekannter Art und Weise mittels Blasluft innerhalb der geschlossenen Blasformhälften 7A, 7B unter innerem Druck aufgeweitet werden und bei Erstarrung das Formnest ausfüllen.

Die Technik des Extrusionsblasformens ist hinlänglich bekannt, so dass auf diese nachstehend nicht mehr im Einzelnen eingegangen wird.

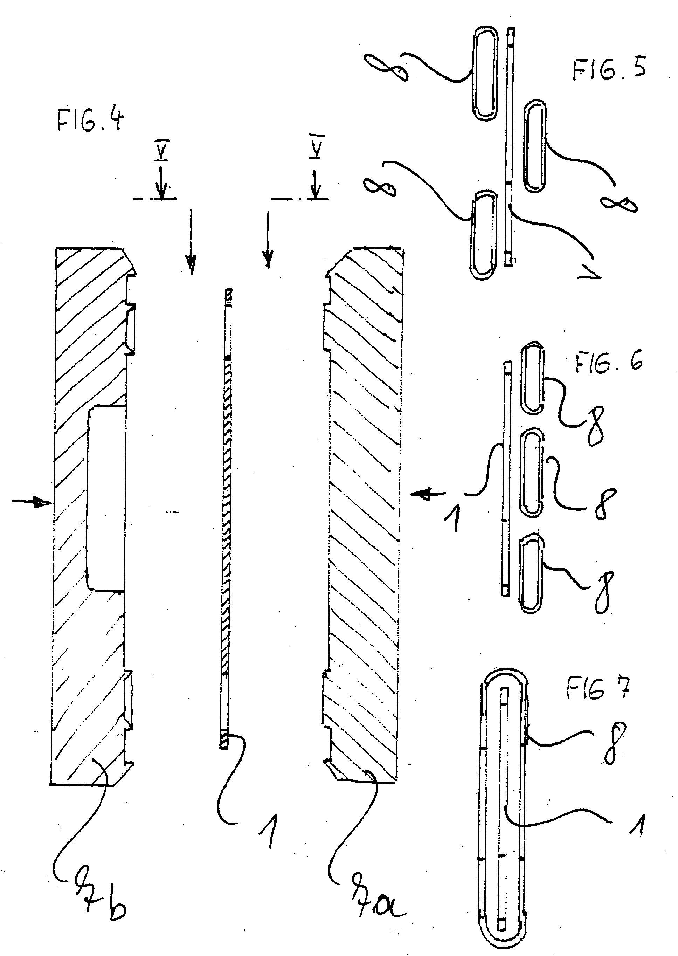

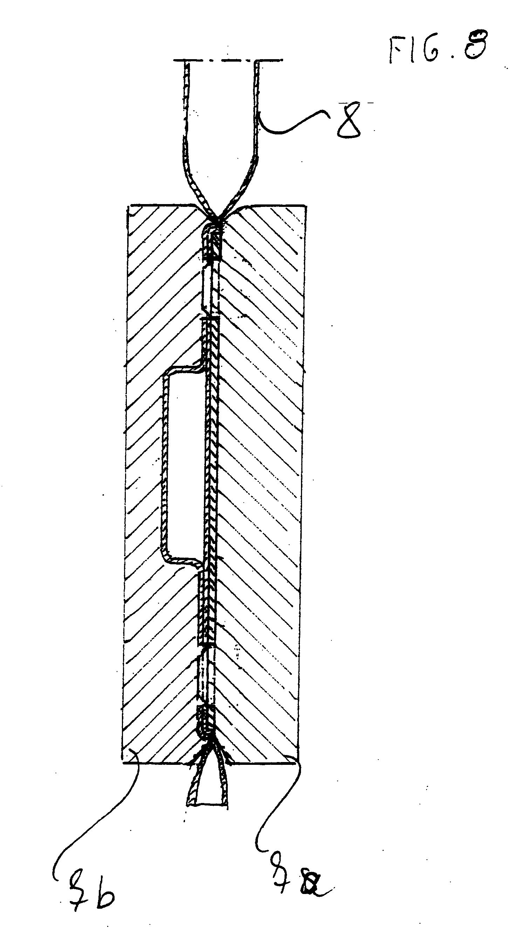

Bei der einfachsten Variante des Trägers gemäß der Erfindung ist vorgesehen, wie dies in Fig. 7 andeutungsweise dargestellt ist, dass ein einziger schlauchförmiger Vorformling hängend extrudiert wird, und zwar so, dass der zwischen den Blasformhälften 7A, 7B frei positionierte Stahlblechrahmen von dem Vorformling 8 umhüllt wird. Werden nun die Blasformhälften 7A, 7B unter Krafteinwirkung zusammengefahren, so dass der Vorformling einen umlaufenden Butzen bildend entlang der äußeren Konturen des Formnestes abgequetscht wird, so ist der Stahlblechrahmen 1 vollständig vom Kunststoff ummantelt und je nach Ausbildung der Kavität bzw. des Formnestes mehr oder weniger vom Kunststoff durchdrungen. Auf diese Art und Weise wird ein Kunststoff-Metall-Verbundbauteil mit hoher Stabilität erhalten. Verschiedene stoffliche Zusammensetzungen des Kunststoffs, beispielsweise über die Höhe der in Fig. 4 dargestellten Blasform lassen sich bei Extrusionen mit einem Vorformling 8 durch sequentielle Extrusionen verschiedener Kunststoffe erzielen.

Die Figuren 5, 6 und 7 zeigen schematisch verschiedene Varianten der Herstellung des Trägers gemäß der Erfindung. Bei den in Fig. 5 und 6 schematisch dargestellten Verfahrensweisen werden insgesamt drei schlauchförmige Vorformlinge 8 zwischen die Blasformhälften 7A, 7B extrudiert, wobei diese entweder einerseits des Stahlblechrahmens (Fig. 6) oder auch beiderseits des Stahlblechrahmens (Fig.5) angeordnet sein können. Auf diese Art und Weise können beispielsweise Thermoplasten mit verschiedener stofflicher Zusammensetzung gleichzeitig zwischen die Blasformhälften 7A, 7B extrudiert werden. Durch Wand-Zu-Wand-Verschweißungen und entsprechende Blasluftführung lässt sich ein, wie dies in Fig. 1 dargestellt ist, verhältnismäßig komplexes Bauteil mit hoher Funktionalität herstellen.

Bei dem beschriebenen Ausführungsbeispiel sind in dem mittleren Durchlass zwei Lüfteraufnahmen 9, 10 jeweils für einen Hauptlüfter 10A und einen Klimagerätelüfter 9A vorgesehen. Die Lüfteraufnahmen 9, 10 sind in einer Ausfüllung 11 des mittleren Durchlasses 2 vorgesehen. Die Ausfüllung 11 ist im Bereich der Lüfteraufnahmen 9, 10 doppelwandig ausgebildet, wobei die aufeinanderliegenden Wandbereiche des betreffenden Vorformlings 8 in diesem Bereich miteinander verschweißt worden sind. Es ist denkbar, hier noch Rippen oder ähnliche Profilierungen zur Aussteifung vorzusehen.

Oberhalb der Lüfteraufnahmen 9, 10 ist eine Einlassluftführung 12 mit Resonator aus Polypropylen vorgesehen. Mit 13 ist ein Kühlwasserausgleichsbehälter, mit 14 ein Waschflüssigkeitsbehälter und mit 15 ein Kondensatsammelbehälter bezeichnet. In der Einbaulage von oben nach unten betrachtet kann beispielsweise zur Ausbildung der in Höhe des mittleren Durchlasses 2 angeordneten Behälter 13, 14, 15 sowie der Ausfüllung 11 HDPE oder PP (Highdensity Polyethylen oder Polypropylen) Anwendung finden. Der darüber angeordnete Bereich (Resonator 12) kann beispielsweise aus Polypropylen ausgebildet sein, wohingegen die unterhalb des unteren Durchlasses 3 angeordneten Kühlmittelleitungen 16 aus Polyamid oder dergleichen härterem Kunststoff ausgebildet sein können.

Bei dem dargestellten Ausführungsbeispiel nimmt der untere Durchlass 3 einen Ölkühler 17 auf, der, wie der Klimagerätelüfter 9A sowie der Hauptlüfter 10 nach Fertigstellung des Trägers montiert wurde.

Die zuvor beschriebene Konfiguration kann beispielsweise durch Extrusion dreier Vorformlinge 8 jeweils aus Polypropylen, Polyethylen und Polyamid hergestellt werden, wie dies in Fig. 6 veranschaulicht ist. Alle drei Abschnitte, von den Scheinwerferaufnahmen 4 über den mittleren Durchlass 2 bzw. Kühlluftdurchtritt bis zu den darunterliegenden Kühlmittelleitungen 16 können jeweils durch die Extrusion unterschiedlicher Vorformlinge in eine Extrusionsblasform erhalten worden sein. Dadurch sind dann jeweils mehrere zusammenhängende, durch die Formwandung begrenzte Hohlkörper mit zumindest teilweise in sich abgeschlossenen Hohlräumen entstanden, die den in der Form positionierten Stahlblechrahmen 1 teilweise umschlossen und teilweise durchdrungen haben. Wie vorstehend bereits erwähnt wurde, können die auf dem Stahlblechrahmen angeordneten Behälter oder sonstigen Funktionsbauteile auch mit Verprägungen bzw. Wand-Zu-Wand-Verschweißungen versehen sein, um einzelne in sich geschlossene Behälterabschnitte mit verschiedenen Funktionen zu bilden.

Im Rahmen der Erfindung ist auch denkbar, mehrere Bestandteile aus Blech in der Blasform zu positionieren. Diese Bleche können im verpressten Bereich angeordnet sein und bilden den Stahlrahmen.

### Bezugzeichenliste

- 1: Stahlblechrahmen
- 2: mittlerer Durchlass
- 3: unterer Durchlass
- 4: Scheinwerferaufnahme
- 5: Befestigungsaugen
- 6: Halteelemente
- 7A, 7B: Blasformhälften
- 8: Vorformling
- 9, 10: Lüfteraufnahmen
- 10A: Hauptlüfter
- 9A: Klimagerätelüfter
- 11: Ausfüllung
- 12: Resonator
- 13: Kühlwasserausgleichsbehälter
- 14: Waschflüssigkeitsbehälter
- 15: Kondensatsammelbehälter
- 16: Kühlmittelleitung
- 17: Ölkühler

## Patentansprüche

1. Blasgeformter Kunststoffträger für Kfz-Kühlergebläse mit wenigstens einem Kühlluftdurchtritt, mit Mitteln zur Befestigung wenigstens eines Gebläses und mit wenigstens einem integrierten Flüssigkeitsbehälter oder dergleichen, **dadurchgekennzeichnet,**dass der Träger wenigstens eine vorzugsweise metallene Verstärkungseinlage aufweist, die von dem Kunststoff des Trägers umblasen und wenigstens teilweise durchdrungen ist, wobei die Verstärkungseinlage mit Befestigungsmitteln zur Montage des Trägers und zur Aufnahme weiterer Funktionsbauteile versehen ist.

2. Kunststoffträger nach Anspruch 1, **dadurch gekennzeichnet,dass** die Verstärkungseinlage wenigstens zwei Scheinwerferaufnahmen (4) bildet.

3. Kunststoffträger nach einem der Ansprüche 1 oder 2, **dadurch gekennzeichnet,dass** die aus Kunststoff bestehenden Funktionsbauteile integraler Bestandteil des Trägers sind und in einem Arbeitsgang aus einem oder mehreren Vorformlingen (8) mit dem Träger hergestellt wurden.

4. Kunststoffträger nach einem der Ansprüche 1 bis 3, **dadurchgekennzeichnet**,dass die aus Kunststoff bestehenden Funktionsbauteile durch Wand-Zu-Wand-Verschweißung wenigstens eines schlauchförmige extrudierten Vorformlings (8) erhalten wurden.

5. Kunststoffträger nach einem der Ansprüche 1 bis 4, **dadurchgekennzeichnet**,dass er aus verschiedenen Kunststoffen zusammengesetzt ist.

6. Kunststoffträger nach einem der Ansprüche 1 bis 5, **da-durchgekennzeichnet,**dass er aus mehreren schlauchförmig in eine gemeinsame Form extrudierten Vorformlingen (8) erhalten wurde.

7. Kunststoffträger nach einem der Ansprüche 1 bis 6, **da-durchgekennzeichnet**,dass die Verstärkungseinlage als vorgestanztes und/oder zumindest teilweise vorgeformter Stahlblechrahmen (1) ausgebildet ist.

8. Kunststoffträger nach einem der Ansprüche 1 bis 7, **dadurch gekennzeichnet,dass** die Verstärkungseinlage beim Schließen der Blasformhälften 7A, 7B dauerhaft verformt wurde.
